(19) Europäisches Patentamt / European Patent Office / Office européen des brevets

(11) **EP 3 326 874 A1**

(12) **EUROPEAN PATENT APPLICATION**
published in accordance with Art. 153(4) EPC

(43) Date of publication:
**30.05.2018  Bulletin 2018/22**

(21) Application number: **16827675.6**

(22) Date of filing: **12.07.2016**

(51) Int Cl.:
*B60T 7/12* (2006.01)       *B60T 8/00* (2006.01)

(86) International application number:
**PCT/JP2016/070617**

(87) International publication number:
**WO 2017/014115 (26.01.2017 Gazette 2017/04)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **17.07.2015   JP 2015143480**

(71) Applicants:
• **Advics Co., Ltd.**
  **Kariya-shi, Aichi 448-8688 (JP)**
• **TOYOTA JIDOSHA KABUSHIKI KAISHA**
  **Toyota-shi, Aichi-ken 471-8571 (JP)**

(72) Inventors:
• **NAKAGAWA, Yusuke**
  **Kariya-shi**
  **Aichi 448-8688 (JP)**
• **OHMORI, Yosuke**
  **Kariya-shi**
  **Aichi 448-8688 (JP)**
• **IKE, Wataru**
  **Toyota-shi**
  **Aichi 471-8571 (JP)**

(74) Representative: **Winter, Brandl, Fürniss, Hübner, Röss, Kaiser, Polte - Partnerschaft mbB**
**Patent- und Rechtsanwaltskanzlei**
**Alois-Steinecker-Strasse 22**
**85354 Freising (DE)**

(54) **COLLISION AVOIDANCE CONTROL DEVICE FOR VEHICLE, AND A COLLISION AVOIDANCE CONTROL METHOD**

(57)     In a collision avoidance control device for a vehicle according to an embodiment, for example, when receiving a brake request from a driver in a certain period in which the vehicle decelerates at a first deceleration smaller than a second deceleration, a brake controller controls at least a brake device to decelerate the vehicle at a deceleration calculated by adding the first deceleration and a third deceleration corresponding to the brake request.

FIG.5

EP 3 326 874 A1

**Description**

TECHNICAL FIELD

The present invention relates to a vehicular collision avoidance control device and a vehicular collision avoidance control method.

BACKGROUND ART

Conventionally, there has been known a collision avoidance control device for a vehicle that controls the vehicle to avoid collision with an obstacle ahead based on data acquired in traveling (see, for example, Patent Document 1).

CITATION LIST

Patent Literature

Patent Document 1: Japanese Laid-open Patent Publication No. 2012-121534

SUMMARY OF INVENTION

PROBLEM TO BE SOLVED BY THE INVENTION

The vehicular collision avoidance control device as described above may receive a brake request from a driver through a brake pedal operation while a given deceleration is generated in the vehicle by the collision avoidance control. In this case, it is desirable to ensure that the vehicle decelerates at a deceleration intended by the driver. The conventional technique, however, exclusively selects one of the collision avoidance control and the operation of the driver, which may cause a difference between the driver's intention and the deceleration of the vehicle if the collision avoidance is given priority.

It is an object of the present invention to provide a collision avoidance control device for a vehicle that can control the vehicle to achieve a deceleration intended by a driver while maintaining collision avoidance performance, for example.

A collision avoidance control device for a vehicle according to the present invention comprises, for example, a determiner configured to determine whether to perform collision avoidance control to avoid collision with an obstacle ahead, based on data acquired in traveling; and a brake controller configured to control, upon determination to perform the collision avoidance control by the determiner, at least a brake device to decelerate the vehicle at a first deceleration for a certain period and then to decelerate the vehicle at a second deceleration greater than the first deceleration, wherein when receiving a brake request from a driver in the certain period, the brake controller controls at least the brake device to decelerate the vehicle at a deceleration calculated by adding the first deceleration and the third deceleration corresponding to the brake request.

According to the above-described collision avoidance control device for the vehicle, when receiving the brake request from the driver while the vehicle is decelerated at the first deceleration smaller than the second deceleration before decelerating at the second deceleration, the vehicle is controlled to decelerate at the deceleration calculated by adding the first deceleration and the third deceleration corresponding to the brake request from the driver. Thus, the above-described collision avoidance control device for the vehicle can control the vehicle to achieve a deceleration intended by the driver's brake operation not to fall below the deceleration by the collision avoidance control, for example.

A collision avoidance control method for a vehicle according to the present invention causes a computer to perform, for example, determining whether to perform collision avoidance control to avoid collision with an obstacle ahead, based on data acquired in traveling; and controlling, upon determination to perform the collision avoidance control, at least a brake device to decelerate the vehicle at a first deceleration for a certain period and then to decelerate the vehicle at a second deceleration greater than the first deceleration, wherein when receiving a brake request from a driver in the certain period, at least the brake device is controlled to decelerate the vehicle at a deceleration calculated by adding the first deceleration and a third deceleration corresponding to the brake request.

According to the above-described collision avoidance control method for the vehicle, when receiving the brake request from the driver while the vehicle is decelerated at the first deceleration smaller than the second deceleration before decelerating at the second deceleration, the vehicle is controlled to decelerate at the deceleration calculated by adding the first deceleration and the third deceleration corresponding to the brake request from the driver. Thus, according to the above-described collision avoidance control method for the vehicle, the vehicle can be controlled to achieve a deceleration intended by the driver's brake operation not to fall below the deceleration by the collision avoidance control, for example.

BRIEF DESCRIPTION OF DRAWINGS

FIG. 1 is an exemplary schematic diagram illustrating a configuration of a vehicle in which a collision avoidance control device for the vehicle according to an embodiment is installed;
FIG. 2 is an exemplary explanatory diagram illustrating transition of control state of the collision avoidance control device for the vehicle according to the embodiment;
FIG. 3 is an exemplary schematic block diagram illustrating a brake electronic control unit (ECU) included in the collision avoidance control device for the vehicle according to the embodiment;

FIG. 4 is an exemplary flowchart illustrating a control performed by the collision avoidance control device for the vehicle according to the embodiment; and

FIG. 5 is a graph illustrating an example of a change with time in deceleration of the vehicle in the collision avoidance control device for the vehicle according to the embodiment.

DESCRIPTION OF EMBODIMENT

An exemplary embodiment of the present invention will be described below. Configurations of the embodiment described below and functions and results (effects) brought by the configurations are presented for illustrative purposes only. The present invention can be implemented by other configurations than those disclosed in the embodiment below. The present invention can attain at least one of the effects (including derivative effects) that are brought by the configurations.

The following describes, as an example, a situation that units/elements of a vehicle 100 are controlled to avoid collision with an obstacle ahead while the vehicle 100 is traveling forward.

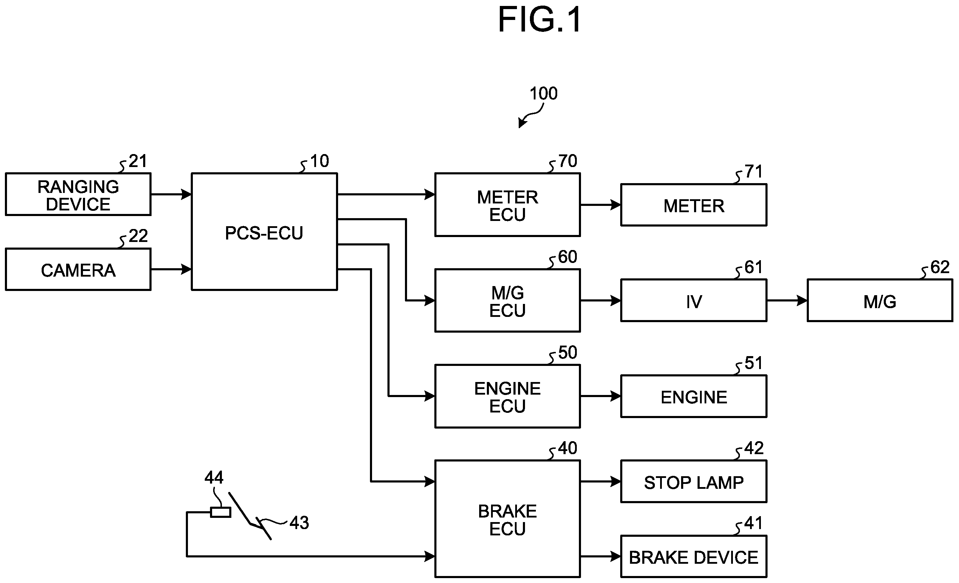

FIG. 1 is an exemplary schematic view illustrating a configuration of the vehicle 100. As illustrated in FIG. 1, the vehicle 100 includes, for example, an engine 51, a motor generator (M/G) 62, and a brake device 41. The engine 51 and the motor generator 62 accelerate the vehicle 100. In this regard, the engine 51 and the motor generator 62 may be referred to as a propulsion source or propulsion device. The vehicle 100 may include at least either the engine 51 or the motor generator 62 as its propulsion source. Acceleration of the vehicle 100 corresponds to an increase with time (time derivative) in velocity of the vehicle 100 traveling forward, and deceleration of the vehicle 100 corresponds to a decrease with time (time derivative) in velocity of the vehicle 100 traveling forward. In this regard, acceleration is also negative deceleration, and deceleration is also negative acceleration. In other words, as breaking force of the brake device 41, that is, a deceleration decreases, an acceleration increases, whereas, as propulsion force of the engine 51 or the motor generator 62, that is, an acceleration decreases, a deceleration increases.

The vehicle 100 includes a pre-crash safety electronic control unit (PCS-ECU) 10. When an obstacle is detected ahead of the vehicle 100, the PCS-ECU 10 determines whether there is a possibility of collision with the obstacle, on the basis of data acquired in traveling. When determining that collision is possible, the PCS-ECU 10 gives instructions to, for example, a brake ECU 40, an engine ECU 50, and a motor generator ECU (M/G ECU) 60 that control the brake device 41, the engine 51, and the motor generator 62 to avoid collision with the obstacle. The PCS-ECU 10 is an example of a determiner. In the present embodiment, although the PCS-ECU 10 gives instructions for controlling the acceleration or deceleration of the vehicle 100, that is, propulsion force or braking force, the PCS-ECU 10 may also give instructions for controlling the steering of the vehicle 100.

The PCS-ECU 10 includes a control unit such as a central processing unit (CPU) or a controller, and storage units such as a read only memory (ROM), a random access memory (RAM), and a flash memory. The storage units may store therein, for example, a computer program for causing the PCS-ECU 10 to operate and data for use in arithmetic processing of the PCS-ECU 10.

The vehicle 100 includes a ranging device 21 and a camera 22. The ranging device 21 and the camera 22 are examples of obstacle detectors.

The ranging device 21 wirelessly and contactlessly measures a distance to the obstacle and is, for example, a radar device or a sonar device. The PCS-ECU 10 acquires from the ranging device 21 data indicating the distance to the obstacle. In this case, the data indicating the distance may be numeric data indicating the distance itself or data indicating a value corresponding to the distance.

The camera 22 is a digital camera including an imaging device such as a charge-coupled device (CCD) or a CMOS image sensor (CIS). The camera 22 can output video data at a certain frame rate. The PCS-ECU 10 may acquire a distance to the obstacle by acquiring data indicating an image captured by the camera 22 and using this image data.

Various sensors, which are not illustrated, are installed in the vehicle 100 and data indicating sensing results is input from the sensors to the PCS-ECU 10. The sensors installed in the vehicle 100 may include sensors that output results of detection of the state of the vehicle 100. Examples of the sensors that output results of detection of the state of the vehicle 100 include a speed sensor, an accelerometer, and a gyro sensor.

The sensors installed in the vehicle 100 may include sensors that output results of detection of an amount of operation or a required amount of operation of an operating element by the driver. Examples of the operating element to be operated by the driver include an accelerator pedal, a brake pedal, a brake handle, a steering wheel, and switches.

The sensors installed in the vehicle 100 may include sensors that output results of detection of the states of any devices installed in the vehicle 100. Examples of the devices installed in the vehicle 100 include the brake device 41, the engine 51, the motor generator 62, an inverter (IV) 61, a steering system, and a suspension system. Examples of physical quantities to be detected by the sensors installed in the vehicle 100 include distance, displacement, velocity, acceleration, rotational speed, angle, angular velocity, and angular acceleration. The PCS-ECU 10 may receive numerical data indicating each physical quantity itself, and may receive data indicating a value corresponding to a level or intensity of each physical quantity.

The data to input to the PCS-ECU 10 may be digital data, analogue data such as potential having no digitized value, or data that corresponds to not a value of a physical quantity but on/off states or individual phases.

To perform collision avoidance control, the PCS-ECU 10 calculates an estimated time for the vehicle 100 to collide with an obstacle ahead, that is, a time to collision (TTC). As a simplest example, the PCS-ECU 10 can calculate TTC by an expression:

$$TTC = Ds/Vr$$

where Ds represents the distance to the obstacle and Vr represents the relative velocity of the vehicle 100 to the obstacle. TTC may be calculated in consideration of a relative acceleration of the obstacle and a deceleration of the vehicle 100. When, for example, TTC is equal to or smaller than a certain value, the PCS-ECU 10 can determine a possibility of collision.

The PCS-ECU 10 calculates the acceleration or deceleration of the vehicle 100 for the collision avoidance control. The PCS-ECU 10 is an example of a collision avoidance controller.

The brake ECU 40 controls the brake device 41 such that an acceleration or a deceleration set by the PCS-ECU 10 is achieved. The brake ECU 40 receives a signal indicating a value corresponding to a stroke of a brake pedal 43, that is, an amount of operation of the brake pedal 43 from a sensor 44. The brake ECU 40 is an example of a brake controller. The engine ECU 50 controls the engine 51 such that an acceleration or a deceleration set by the PCS-ECU 10 is achieved. The motor generator ECU 60 controls the inverter 61 such that the motor generator 62 operates to achieve an acceleration or a deceleration set by the PCS-ECU 10.

The brake ECU 40 can control a stop lamp 42 mounted on the rear end of the vehicle 100 to light up. Lighting-up of the stop lamp 42 may be an indication of warning to the periphery of the vehicle 100, for example, to the vehicles behind. A meter ECU 70 can control a meter 71 mounted on, for example, an instrument panel to display a warning. The display output of the meter 71 may work as an indication of warning to the driver or passengers in a vehicle cabin. The stop lamp 42 and the meter 71 may be referred to as warning output devices, output devices, warning devices, or display output devices. An audible output may be output from a sound output device, which is not illustrated. The sound output device is, for example, a speaker or a buzzer, and may be referred to as a warning output device, output device, or warning device.

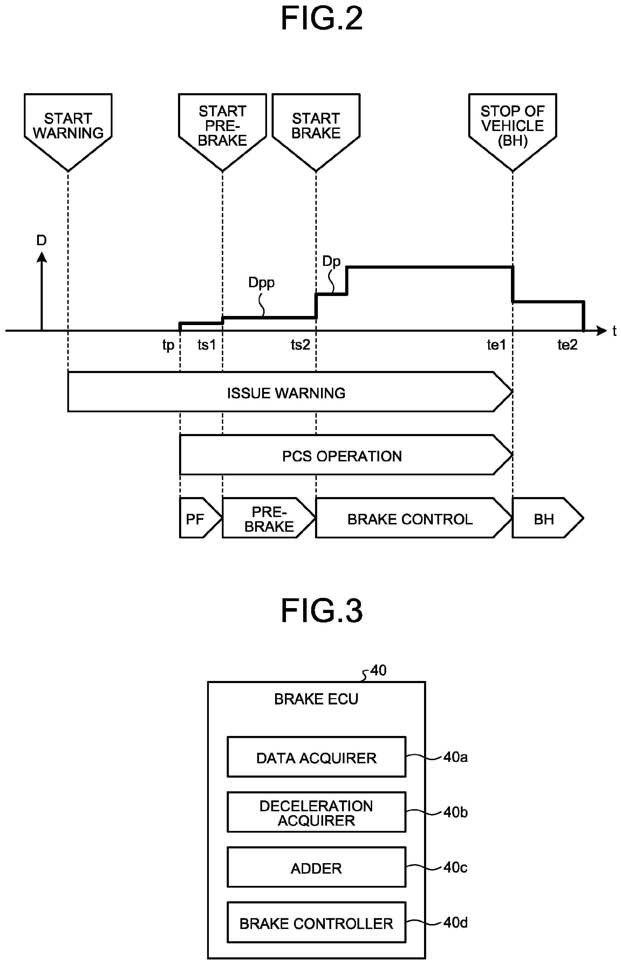

FIG. 2 illustrates an example of transition of control state in an automatic collision avoidance control without a brake operation by the driver. In the graph in FIG.

2, the horizontal axis represents time t and the vertical axis represents deceleration D. In FIG. 2, the vertical axis represents required values of deceleration.

The PCS-ECU 10 calculates TTC at certain time intervals from data acquired during the travel of the vehicle 100. In accordance with TTC values, the PCS-ECU 10 starts collision avoidance control, shifts the collision avoidance control to a next phase, or terminates the collision avoidance control. In other words, the PCS-ECU 10 monitors the situations relating to collision avoidance based on TTC.

First, the PCS-ECU 10 starts issuing a warning by means of, for example, the meter 71 or a speaker.

Next, the PCS-ECU 10 gives an operational instruction to the brake ECU 40 to slightly decelerate the vehicle 100 for a certain period. Thereby, the brake ECU 40 activates a pump (not illustrated) of the brake device 41 to eliminate a gap between a brake pad and a rotor, a brake disc, or a drum. This operation may be referred to as brake prefill (PF). The pump is activated by the prefill operation, which increases responsiveness compared to a case in which braking force is increased from a non-activated state of the pump and also eliminates a gap or a dead stroke. This leads to increasing responsiveness of the start of the collision avoidance control.

The PCS-ECU 10 instructs the brake ECU 40 to perform a pre-brake operation for a certain period. Specifically, the PCS-ECU 10 transmits an instruction signal to the brake ECU 40 to illuminate the stop lamp 42. The PCS-ECU 10 instructs the brake ECU 40 to attain, for example, a minimum deceleration (braking force) required for illuminating the stop lamp 42, and the brake ECU 40 controls the brake device 41 as instructed. In the present embodiment, the main purpose of the pre-brake operation is to illuminate the stop lamp 42. The pre-brake operation may be set to produce a required deceleration that prompts the driver in a vehicle behind to perform a deceleration operation. The deceleration in the pre-brake operation is greater than that in the prefill operation.

The PCS-ECU 10 then instructs the brake ECU 40 to start brake control for avoiding collision. Specifically, the PCS-ECU 10 instructs the brake ECU 40 to change the velocity of the vehicle 100 at a required deceleration, that is, to apply a required braking force to the vehicle 100, and the brake ECU 40 controls the brake device 41 as instructed. In this brake control, the deceleration (braking force) may be increased incrementally. The deceleration in the brake control is greater than that in the prefill operation and the pre-brake operation.

When the vehicle 100 stops without colliding with the obstacle, the PCS-ECU 10 instructs the brake ECU 40 to maintain the vehicle 100 in a stopped state for a certain period, and the brake ECU 40 controls the brake device 41 as instructed. This operation may be referred to as brake hold (BH).

In the present embodiment, the PCS-ECU 10 can terminate the above-described collision avoidance control by a driver's operation of the acceleration pedal or the steering wheel, that is, through an acceleration request operation or a steering operation.

FIG. 3 illustrates an example of the brake ECU 40. The brake ECU 40 can implement various functions by performing processing in accordance with computer program(s) installed and loaded thereon. In other words, the brake ECU 40 can function, for example, as a data acquirer 40a, a deceleration acquirer 40b, an adder 40c, and a brake controller 40d by performing processing in accordance with the computer program(s). At least one of the functions of the above modules may be implemented by hardware.

The data acquirer 40a acquires data for use in the brake control. Examples of the data for use in the brake control may include data indicating a deceleration from the PCS-ECU 10, that is, a required deceleration, and include data from the sensor 44 indicating an amount of operation of the brake pedal 43.

The deceleration acquirer 40b acquires a deceleration corresponding to an amount of operation of the brake pedal 43, that is, a deceleration corresponding to a brake request from the driver. The deceleration acquired herein is irrelevant to the activation or non-activation of the collision avoidance control. In other words, the deceleration corresponding to the amount of operation of the brake pedal 43 retains unchanged when the driver operates the brake pedal 43 to brake in a normal situation with no activation of collision avoidance control and when the driver operates the brake pedal 43 to brake during the collision avoidance control. The deceleration acquirer 40b acquires a deceleration corresponding to the amount of operation on the basis of, for example, data such as a map, a table, a mathematical function, or a mathematical expression stored in a storage included in the brake ECU 40.

Following the instruction from the PCS-ECU 10, the adder 40c adds the deceleration by the pre-brake operation of the collision avoidance control and the deceleration corresponding to the brake request from the driver acquired by the deceleration rate acquirer 40b.

The brake controller 40d performs the PCS operation illustrated in FIG. 2, that is, the above-described prefill, pre-brake, brake control, and brake hold operations under the collision avoidance control. When the adder 40c sums up the decelerations, the brake controller 40d controls the brake device 41 to decelerate the vehicle 100 at the deceleration obtained by the addition. The brake controller 40d can perform the brake control under vehicle behavior control different from the collision avoidance control.

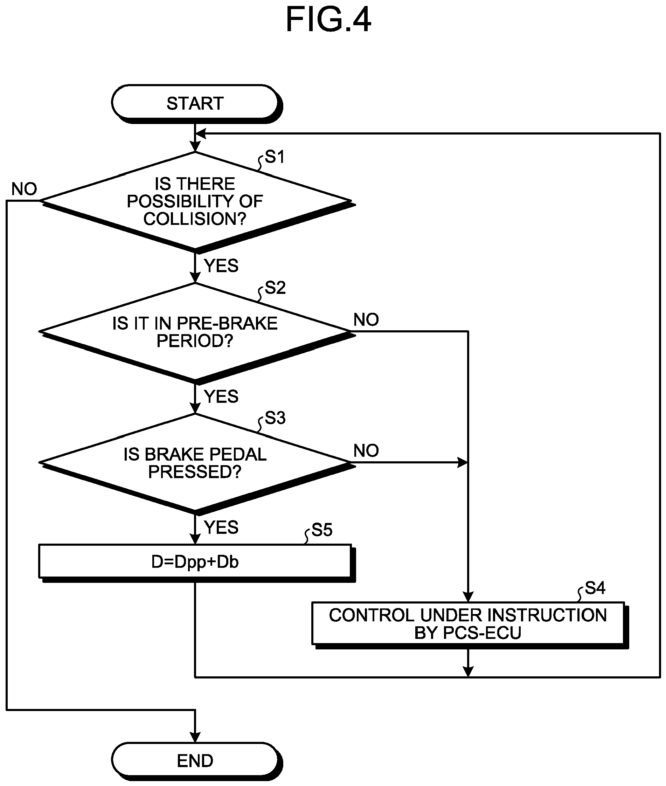

FIG. 4 illustrates an example of a procedure of the brake control according to the present embodiment. The processing flow illustrated in FIG. 4 is performed at certain time intervals. When the PCS-ECU 10 determines that there is a possibility of collision on the basis of TTC, specifically, for example, when TTC is equal to or smaller than a certain value (Yes at S1) and it is not during a pre-brake period (No at S2), control is performed to generate a certain deceleration or braking force in accordance with the instruction from the PCS-ECU 10 (S4).

With yes at S2, that is, when the brake pedal 43 is not pressed during the pre-brake period or when the data acquirer 40a acquires no data indicating an amount of operation of the brake pedal 43 and the deceleration acquirer 40b acquires no deceleration corresponding to the amount of operation of the brake pedal 43 (No at S3), control by the PCS-ECU 10 is performed (S4).

With yes at S3, that is, when the brake pedal 43 pressed, the adder 40c calculates a deceleration D by adding a deceleration Dpp in the pre-brake operation and a deceleration Db corresponding to the amount of operation of the brake pedal 43, and the brake controller 40d then controls the brake device 41 to decelerate the vehicle 100 at the deceleration D obtained by the addition of "D = Dpp + Db" (S5). Upon completion of S4 and S5, the process returns to S1. The deceleration Dpp is an example of a first deceleration, and the deceleration Db is an example of a third deceleration.

The present embodiment has described the example where the brake device 41 causes deceleration (applies braking force), but the braking force may be applied by the motor generator 62 or the engine 51 depending on the situation in each of the above-described steps.

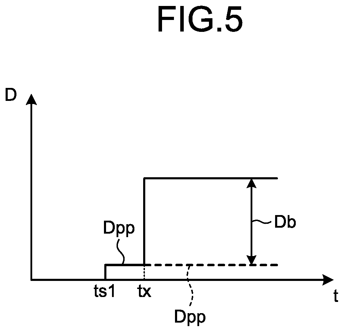

FIG. 5 illustrates a change with time in a deceleration caused by a driver's operation of the brake pedal 43 in a period when the pre-brake operation is performed, that is, in a period (certain period) from time ts1 to time ts2 in FIG. 2. In FIG. 5, the brake controller 40d starts the pre-brake operation from time ts1 and controls the brake device 41 to decelerate the vehicle 100 at the deceleration Dpp. When the driver operates the brake pedal 43 at time tx before time ts2 in FIG. 2, the brake controller 40d controls the brake device 41 to decelerate the vehicle 100 at the deceleration D = Dpp + Db, which is calculated by adding the deceleration Dpp and the deceleration Db corresponding to the amount of operation of the brake pedal 43. After time ts2, as illustrated in FIG. 2, the brake controller 40d controls the brake device 41 to decelerate the vehicle 100 at a deceleration Dp. The deceleration Dp is an example of a second deceleration.

As described above, in the present embodiment, when receiving a brake request from a driver while the vehicle 100 is decelerated at the deceleration Dpp (first deceleration) by the pre-brake operation, the brake controller 40d controls the brake device 41 to decelerate the vehicle 100 at the deceleration D = Dpp + Db, which is calculated by adding the deceleration Dpp by the pre-brake operation and the deceleration Db (third deceleration) responding to the driver's brake request. This can ensure that the vehicle 100 achieves a deceleration intended by the driver, for example.

While a certain embodiment has been described, the embodiment has been presented by way of example only, and is not intended to limit the scope of the inventions. Indeed, the novel embodiment described herein may be embodied in a variety of other forms; furthermore, various omissions, substitutions, combinations and changes in the form of the embodiment described herein may be made without departing from the spirit of the inventions. Various modifications can be made on specifications such as configurations, parts, numbers, time, velocity, and deceleration described in the embodiment to implement the present invention.

EXPLANATIONS OF LETTERS OR NUMERALS

| 10 | PCS-ECU (determiner) |
| 40 | Brake ECU (brake controller) |
| 41 | Brake device |
| 100 | Vehicle |

**Claims**

1. A collision avoidance control device for a vehicle comprising:

a determiner configured to determine whether to perform collision avoidance control to avoid collision with an obstacle ahead, based on data acquired in traveling; and
a brake controller configured to control, upon determination to perform the collision avoidance control by the determiner, at least a brake device to decelerate the vehicle at a first deceleration for a certain period and then to decelerate the vehicle at a second deceleration greater than the first deceleration, wherein
when receiving a brake request from a driver in the certain period, the brake controller controls at least the brake device to decelerate the vehicle at a deceleration calculated by adding the first deceleration and the third deceleration corresponding to the brake request.

2. A collision avoidance control method for a vehicle causing a computer to perform:

determining whether to perform collision avoidance control to avoid collision with an obstacle ahead, based on data acquired in traveling;
controlling, upon determination to perform the collision avoidance control, at least a brake device to decelerate the vehicle at a first deceleration for a certain period and then to decelerate the vehicle at a second deceleration greater than the first deceleration, wherein
when receiving a brake request from a driver in the certain period, at least the brake device is controlled to decelerate the vehicle at a deceleration calculated by adding the first deceleration and a third deceleration corresponding to the brake request.

# FIG.1

EP 3 326 874 A1

# FIG.2

START WARNING

START PRE-BRAKE

START BRAKE

STOP OF VEHICLE (BH)

D

Dpp

Dp

tp ts1 ts2 te1 te2 t

ISSUE WARNING

PCS OPERATION

PF | PRE-BRAKE | BRAKE CONTROL | BH

# FIG.3

40

BRAKE ECU

| DATA ACQUIRER | — 40a |
| DECELERATION ACQUIRER | — 40b |
| ADDER | — 40c |
| BRAKE CONTROLLER | — 40d |

# FIG.4

START

S1
IS THERE
POSSIBILITY OF
COLLISION?

NO

YES

S2
IS IT IN PRE-BRAKE
PERIOD?

NO

YES

S3
IS BRAKE PEDAL
PRESSED?

NO

YES

S5
D=Dpp+Db

S4
CONTROL UNDER INSTRUCTION
BY PCS-ECU

END

# FIG.5

## INTERNATIONAL SEARCH REPORT

| International application No. |
|---|
| PCT/JP2016/070617 |

**A. CLASSIFICATION OF SUBJECT MATTER**
*B60T7/12*(2006.01)i, *B60T8/00*(2006.01)i

According to International Patent Classification (IPC) or to both national classification and IPC

**B. FIELDS SEARCHED**

Minimum documentation searched (classification system followed by classification symbols)
B60T7/12, B60T8/00

Documentation searched other than minimum documentation to the extent that such documents are included in the fields searched
Jitsuyo Shinan Koho          1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2007-320482 A  (Hino Motors, Ltd.), 13 December 2007 (13.12.2007), paragraphs [0008], [0036] to [0054]; fig. 2, 6 to 7 (Family: none) | 1-2 |
| Y | JP 2006-111084 A  (Nissan Motor Co., Ltd.), 27 April 2006 (27.04.2006), paragraphs [0004] to [0005], [0051] to [0052]; fig. 19 (Family: none) | 1-2 |
| A | JP 2007-118880 A  (Toyota Motor Corp.), 17 May 2007 (17.05.2007), paragraphs [0008] to [0009]; fig. 1 (Family: none) | 1-2 |

☐ Further documents are listed in the continuation of Box C.          ☐ See patent family annex.

| * | Special categories of cited documents: |
|---|---|
| "A" | document defining the general state of the art which is not considered   to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 29 August 2016 (29.08.16) | 06 September 2016 (06.09.16) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012121534 A